# EUROPEAN PATENT APPLICATION

(11) **EP 4 481 651 A1**
(43) Date of publication of application: **25.12.2024**
(21) Application number: 23180332.1
(22) Date of filing: 20.06.2023
(51) Int. Cl.: G06Q 10/087, G06Q 10/30, G06Q 50/04

(54) **COMPUTER-IMPLEMENTED METHOD AND SYSTEM FOR DIGITALLY CONTROLLING INDUSTRIAL PRODUCTION OF A CHEMICAL PRODUCT WITH CERTAIN ENVIRONMENTAL IMPACT**

(71) Applicant: BASF SE, 67056 Ludwigshafen am Rhein (DE)
(72) Inventor: Graf, Nicole Dr., 67061 Ludwigshafen am Rhein (DE); Grumbrecht, Bastian, 67061 Ludwigshafen am Rhein (DE); Feyen, Mathias Dr., 67056 Ludwigshafen am Rhein (DE); Haake, Mathias Dr., 67056 Ludwigshafen am Rhein (DE); Pack, Robert, 67061 Ludwigshafen am Rhein (DE); Klosterhalfen, Steffen Thomas, SK1 3GG Stockport (GB); Mayer, Marion, 67056 Ludwigshafen am Rhein (DE); Krei, Georg Arnold Dr., 67056 Ludwigshafen am Rhein (DE); Strege, Stefan, 67056 Ludwigshafen am Rhein (DE); Frey, Bodo, 67056 Ludwigshafen am Rhein (DE)
(74) Representative: BASF IP Association

(57) **Abstract**

Disclosed are a computer-implemented method and system for controlling the production of a chemical product with a certain environmental impact, wherein the method comprises the following steps:
- Receiving a request, or order, indicating a chemical product, a desired quantity of the chemical product and a desired environmental impact of the chemical product;
- determining a local and/or foreign location of one or more underlying chemical input materials required for the production of the requested chemical product, in order to fulfil the desired quantity and the desired environmental impact of the request;
- gathering from a database, based on the determined local and/or foreign location of the required chemical input material(s), environmental impact attributes corresponding to the desired environmental impact required for production of the requested chemical product;
- receiving the chemical input material(s) required for production of the requested chemical product from the determined local and/or foreign location(s);
- removing, in the database, the environmental impact attributes for the chemical input material(s) received from the local and/or foreign location(s).

## Description

### TECHNICAL FIELD

The present disclosure relates to methods and systems for digitally processing or controlling industrially produced products with a certain environmental impact.

### TECHNICAL BACKGROUND

In many fields of industrial production, particularly in the field of chemical production, environmental protection and corresponding sustainable production and consumption is an important factor.

### SUMMARY OF THE INVENTION

According to a first aspect of the herein disclosed computer-implemented method for controlling the production of a chemical product with a certain environmental impact, the method comprises the following steps in an arbitrary order:
- Receiving a request, or order, indicating a chemical product, a desired quantity of the chemical product and a desired environmental impact of the chemical product;
- determining a local and/or foreign location of one or more underlying chemical input materials required for the production of the requested chemical product, in order to fulfil the desired quantity and the desired environmental impact of the request;
- gathering from a database, based on the determined local and/or foreign location of the required chemical input material(s), environmental impact attributes corresponding to the desired environmental impact required for production of the requested chemical product;
- receiving the chemical input material(s) required for production of the requested chemical product from the determined local and/or foreign location(s).

According to another aspect of the herein disclosed method, the environmental impact attributes for the chemical input material(s) received from the local and/or foreign location(s) are then removed in the database.

According to a further aspect of the herein disclosed method, the physical markings may be barcodes, QR codes, or any other visible markings, in particular machine-readable markings. According to a further aspect, the herein disclosed method may include the step of determining a location of the chemical product with the desired quantity to meet the request includes determination of potentially relevant waste-derived input material(s) and/or not waste-derived input material(s) required to achieve the desired environmental impact.

According to a further aspect of the herein disclosed method, waste-derived input material(s) may be classified into at least one of the following waste material-related environmental impact attributes: "recyclable"/"recycled", "reusable"/"reused", "renewable"/"renewed", "recoverable"/"recovered, "disposable"/"disposed"; and wherein not waste-derived input material(s) may be classified into at least one of the following non-waste material-related environmental impact attributes: "biomass-based", "virgin feedstock", "bio-based" or "fossil feedstock".

According to a another aspect of the herein disclosed method, the step of determining a location of the chemical product with the desired quantity may further include determination of potentially required energy sources to achieve the desired environmental impact, wherein the energy sources may be classified into the following energy-related environmental impact attributes "non-renewable energy-based" and "renewable energy-based".

According to a further aspect of the herein disclosed method, the database may provide available environmental impact attributes for a multitude of chemical input materials required for production of a chemical product, and wherein the environmental impact attributes of the multitude of chemical input materials may be allocated to mentioned waste-derived input material(s) and/or to mentioned not waste-derived input material(s) and/or to mentioned energy sources.

According to a further aspect of the herein disclosed method, a waste material-related data object including the environmental impact attributes for each of the multitude of chemical input materials required for production of a chemical product may be provided.

According to a further aspect of the herein disclosed method, authorization to access a the waste material-related data object may be controlled by at least one authorization rule being associated with a unique identifier. Hereby, the at least one authorization rule may be configured for reverse data tracking of the waste-derived material used for production of a product.

Herein disclosed is also a computer-implemented method for producing a chemical product with a certain environmental impact, according to the steps of any of the preceding aspects of the herein disclosed method.

According to a first aspect of the herein also disclosed computer-implemented system for controlling the production of a chemical product with a certain environmental impact, wherein the system comprising a request or order processing unit for receiving requests indicating a chemical product together with a desired quantity of the chemical product and a desired environmental impact of the chemical product, the request/order processing unit is set up for:
- determining a local location and/or a foreign location of underlying chemical input material(s) required for the production of the requested chemical product, in order to fulfil the desired quantity and the desired environmental impact;
- gathering from a database, based on the determined local and/or foreign location of the required chemical input material(s), environmental impact attributes corresponding to the desired environmental impact required for production of the requested chemical product;
- receiving the chemical input material(s) required for production of the requested chemical product from the determined local and/or foreign location(s).

According to a further aspect of the herein disclosed system, the environmental impact attributes for the chemical input material(s) received from the local and/or the foreign location(s) are then removed in the database.

According to a further aspect of the herein disclosed system, the database may comprise location information about local and/or foreign real stocks of the multitude of chemical input materials required for production of a chemical product and virtual stocks of available environmental impact attributes for the multitude of chemical input materials required for production of a chemical product. The database may also be arranged in a decentralized network of nodes which share data with each other, for storing available environmental impact attributes for a multitude of chemical input materials required for production of a chemical product.

According to a further aspect of the herein disclosed system, the available environmental impact attributes may be allocated to above mentioned waste-derived input material(s) and/or to above mentioned not waste-derived input material(s) and/or to above mentioned energy sources.

According to a further aspect, the herein disclosed system may comprise control unit for production of the chemical product with the desired quantity of the requested chemical product and the desired environmental impact of the requested chemical product, based on the herein disclosed method.

According to a further aspect of the herein disclosed system, a waste material-related data object to allocate the removed environmental impact attributes to the requested chemical product may be provided. Such a data object may be used by the requesting entity (e.g. legal or individual person) to prove the environmental impact of the requested/ordered chemical product via-à-vis its/his/her customers or via-à-vis an official authority like a supervisory authority or an environmental agency.

Herein disclosed is also a software-implemented product element which, when running on a computer, may be proving a chemical product together with its allocated environmental impact attributes, which may be included in a mentioned data object.

The herein disclosed method and system allow for automized processing, controlling or monitoring the industrial production of chemical products based on a certain environmental impact being requested or ordered by a requesting/ordering entity.

"Chemical product" means any kind of chemical product to which a request, e.g a customer request or order, may pertain.

"Location of the chemical product means the location, where it is stored physically. The location where it is stored can be the local location where it is produced or a foreign or remote location which is different from the local location, e.g. a local or foreign storage facility. The foreign location can be owned by a supplier from which a local producer buys a chemical product or an underlying chemical input material required for the production of a chemical product. Such products or input materials may be products that are required to achieve a requested environmental impact attribute.

Exemplary environmental impact attributes in the field of production of chemical products include but are not limited to recycled content, renewable content, fossil content or biomass content. Further included are any and all claims, credits, benefits, emissions reductions, offsets, and allowances, howsoever entitled, resulting from the avoidance of the emission of any gas, chemical, or other substance to the environment. Non-renewable material resources are mainly oil, natural gas, coal, and nuclear energy, wherein oil, natural gas, and coal are collectively called fossil fuels.

More particularly, such attributes may be any avoided emissions of pollutants to the air, soil or water such as sulfur oxides (SOx), nitrogen oxides (NOx), carbon monoxide (CO) and other pollutants; (2) any avoided emissions of carbon dioxide (CO2), methane (CH4) and other greenhouse gases (GHGs).

It has to be mentioned that above mentioned environmental impacts may be combined with each other, e.g. "recycled content" and "carbon dioxide emissions".

The feature "receiving a request indicating" may also include "initiating a request to produce" the chemical product in the desired quantity to meet the request.

The database allows to store environmental impact attributes (de-centrally) anywhere in the world.

The feature "foreign location" may also include a situation means where a requested or ordered chemical product or corresponding chemical input material required for production of the requested chemical product may be located a certain distance of e.g. 100 km away from the production site or location of the requested chemical product. The term "foreign location" therefore includes any necessary cross-border transport of a requested chemical product or corresponding chemical input material. This allows for managing different attributes which might be required due to different (law) regulations when crossing a regional or national border.

On the other hand, the feature "removing the environmental impact attributes for the received or acquired underlying chemical input material being gathered from the local location and/or the foreign location in the database" relates to a chemical product or underlying chemical input material which is stored at a location which is less than e.g. 100 km, preferably less than 10 km away from the location where the chemical product, to which the request pertains, is stored.

It has to be mentioned that a desired quantity and desired environmental impact attribute for a requested chemical product might take into consideration that the product quality may depend on desired environmental impact attribute. This correlation therefore may be communicated to a requesting party.

Authorization to access waste material-related data object may be based on one or more authorization rules which may be associated with such a unique identifier and the data related to the underlying chemical product data of the waste material or product. The authorization rule(s) may include instructions configured for reverse data tracking of the chemical material or product used to produce the underlying waste material or product.

The at least one authorization rule may relate to instruction(s) which, based on the mentioned event trigger, process waste-related material property data specified by the authorization rule to generate and to provide corresponding tracking data. The authorization rule(s) may relate to or include such an event trigger related to the use of the chemical product(s) for producing the underlying waste material or product. The use of such waste-related data may include any processing of the unique identifier, associated with the underlying chemical product and/or the data related to the underlying chemical product. For example, concatenating or linking the unique identifier associated with the waste material or product produced based on the underlying chemical product and the unique identifier associated with the chemical product and/or the data related to the underlying chemical product may be the event trigger specified by the authorization rule.

The at least one authorization rule may relate to at least one event trigger related to the use of the unique identifier associated with the underlying chemical product and/or of the data related to the underlying chemical product. The authorization rule may relate to, or include, instruction(s) based on the at least one event trigger. The event trigger for reverse tracking of the chemical product(s) underlying the present waste material or product may relate to one or more processing steps related to the unique identifier and/or the data related to the chemical product data of the reversely tracked chemical product(s). The event trigger may trigger or initialize instructions to generate tracking data from product data for providing such tracking data.

The authorization rule(s) may also relate to a specification of tracking data based on product data associated with the waste material or product being produced using or based on an underlying chemical product. The authorization rule may specify tracking data based on product data associated with the waste material or product being produced using or based on the chemical product. The authorization rule may specify tracking data to be derived from product data associated with the waste material or product being produced using or based on the chemical product.

### BRIEF DESCRIPTION OF THE DRAWINGS

The accompanying figures are included to provide a further understanding of examples and are incorporated in and constitute part of this specification.

In the figures:
- FIG. 1: shows a pyrolysis and cracker process according to the prior art;
- FIG. 2: shows a variant of the pyrolysis-based system and process depicted in FIG. 1;
- FIG. 3: shows an embodiment of the herein disclosed method and system by a block/flow diagram; and
- FIG. 4: illustrates how a herein disclosed waste material-related data object may be implemented.

### DETAILED DESCRIPTION

In most industrial production technology areas, particularly in the field of chemical production, the management of waste is known to be based on different waste categories, like recyclable or recycled, reused, renewed, renewable or reusable materials. In the chemical field, these materials may also include biomass-based materials or renewable energy-based materials.

In the area of chemical recycling, the environmental impact contributors of chemical materials or substances are their hydrocarbon content, their heating value, their heteroatom content next to C and H, their H2O-content, their biomass content, their metal content, the molecular weight of their hydrocarbons, their content of composite materials (for example multilayer packages or glass fiber containing wind blades), their overall density, their material-specific density differences, their particle size, their material distribution, their degree of Poyler cross-liking or their coloration.

In addition, such industrial waste materials may have an impact on known "mass-balance" approaches, which allow to determine the use of chemically recycled or bio-based feedstock materials in a final product. In such mass-balance approaches, both recycled and virgin feedstock or bio-based and fossil feedstock materials may be used in the production process.

More particularly, a mass-balance approach allows to determine the mass fraction of the main component of a high-purity organic material. Therefore, a mass-balance approach is a transparent book-keeping process, like a chain-of-custody approach, that allows for tracking the net amount of sustainable materials as these materials move through a production system or a whole value chain or supply chain. The mass-balance approach thus ensures an appropriate allocation of these materials to the finished goods, based on an auditable bookkeeping (see, for instance, Ellen MacArthur, White Paper 2019.pdf, MacArthur Foundation).

Thereupon, such industrial waste materials have also a strong impact on carbon footprint-based environmental processing approaches and the related management of CO2 certificates.

In the chemical industry, the chemical recycling of waste streams is well-known approach. As an example, hydrocarbon containing streams can be processed by different thermal methods, e.g. by pyrolysis or gasification into liquid or gaseous hydrocarbons. These intermediates can replace fossil-based feedstocks in refineries or petrochemical sites. Thereupon, in the chemical production area, so-called "Chemcycling" approaches, e.g. based on a pyrolysis processes or chemical production processes processing Naphtha and bio-based Naphtha, are known. However, chemical recycling does not necessarily have to be carried out using pyrolysis. Alternatively, other processes like hydrothermal, solovlytic, catalytic, etc. can be used as well and insofar the following descriptions referring to FIG.S 1 and 2 are only exemplary.

Nowadays, production facilities and plants being used in different industrial production areas, including the underlying energy flow, the underlying logistics and the given infrastructure, are networked together intelligently in a so-called "Verbund" system. In such a system, for instance, chemical processes can run in different production plants or facilities which may be distributed in different countries or regions where the above mentioned cross-border problem is involved. In such a distributed way, the underlying chemical processes can run in a resource-efficient way with lower energy consumption and higher yields.

In the case of a chemical Verbund system, the complete value chain of such a Verbund includes, for instance, at least one steam cracker and a synthesis gas plant. The synthesis gas plant hereby is a core element of the Verbund. In this value chain, underlying chemical products may be further processed into a multitude of commercial products through further production process steps. Hereby it is aimed that nothing is wasted in the entire production process, what can be achieved in that any by-products of one facility may serve another facility as a valuable input material.

Known "Verbund production systems" also may comprise efficient value chains that extend from basic chemicals to high-value-added products, such as coatings or crop protection agents. Also in this scenario, the by-products of one plant can be used as the starting materials of another. In such a Verbund system, the underlying chemical processes consume less energy, produce higher product yields and conserve resources. In that manner, raw materials and energy can be saved, emissions minimized, logistics costs cut and production-related synergies exploited.

A production "Verbund" (or network) thus ensures competitive supply of key products to all segments with value chains rooted in the Verbund. Hereby it is distinguished between a "Technology Verbund" and a "Digital Verbund". A "Technology Verbund" leverages technological advantages across all segments by breadth, impact and best in class expertise, e.g., biotech sciences, catalysis, formulation platform. A "Digital Verbund" systematically uses and harvests the huge advantages and potential offered by digitalization throughout a production Verbund network, e.g. with respect to data management, scale, artificial intelligence, etc.

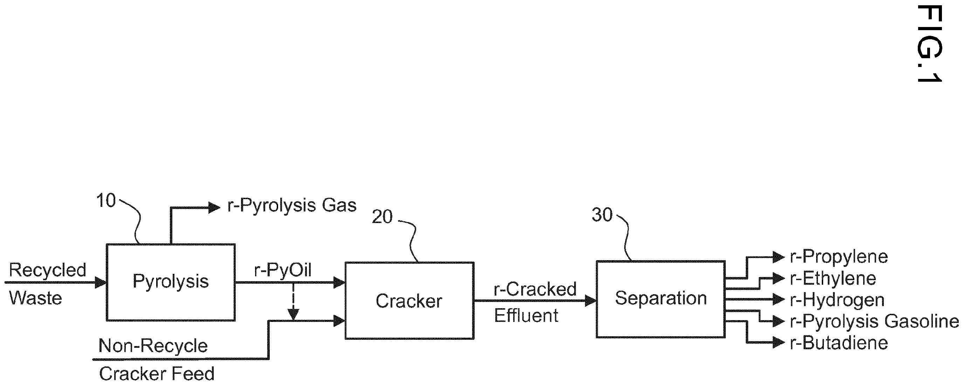

Referring now to US 2022/0402860 A1, as depicted in FIG.1, a mentioned pyrolysis and cracker process is described in more detail. In this chemical production scenario, alkanolamines are produced after a cracker 20, e.g. cracking furnace, and separated accordingly by means of a solids separator or fractionator 30. More particularly, in FIG. 1 a process for employing a recycle content pyrolysis oil composition (r-PyOil) to make one or more recycle content compositions into r-compositions is illustrated. Of course, herein shown are only one of many products that can then be manufactured. Further it has to be mentioned that the shown mixed feedstocks can be fed into the cracker simultaneously and/or mixed beforehand (see e.g. FIG. 5) and then fed in as a mixed feedstock.

The one or more recycle content compositions, i.e. the mentioned "r-composition", may be ethylene, propylene, butadiene, hydrogen, and/or pyrolysis gasoline. The recycled waste may be subjected to pyrolysis in pyrolysis unit 10 to produce a pyrolysis product or effluent comprising a recycle content pyrolysis oil composition ("r-PyOil"). The r-PyOil may be fed to a cracker 20, along with a non-recycle cracker feed, e.g., propone, ethane, and/or natural gasoline. A recycle content cracked effluent ("r-Cracked Effluent") may be produced from the cracker and then may be subjected to separation in a separation train, e.g. a solids separator or a fractionator 30.

At least a portion of the composition may be obtained from the pyrolysis of recycled waste, e.g. waste plastic or waste stream. The "r-Ethylene" may be a composition comprising ethylene obtained from cracking of a cracker feed containing r-PyOil, or ethylene having a recycle content value attributed to at least a portion of the ethylene. The "r-Propylene" may be a composition comprising propylene obtained from cracking of a cracker feed containing r-PyOil, or propylene having a recycle content value attributed to at least a portion of the propylene.

The corresponding values "recycle content value" and "r-value" mean a real unit of measure representative of a real quantity of material having its origin in recycled waste. The r-value may have its origin in any type of recycled waste processed in any type of process.

The values "pyrolysis recycle content value" and "pr-value" mean a real unit of measure representative of a real quantity of material having its origin in the pyrolysis of recycled waste. The pr-value is a specific subset/type of the above-mentioned r-value that is tied to the pyrolysis of recycled waste. Therefore, the term r-value encompasses, but does not require, a pr-value.

The particular recycle content values, i.e. r-value or pr-value, may be calculated or determined by mass or percentage or any other unit of measure and can be determined according to a standard system for tracking, allocating, and/or crediting real recycle content among various compositions. A recycle content value may be deducted from a real recycle content inventory and may be applied to a product or composition to attribute recycle content to the product or composition.

The values "pyrolysis recycle content allotment" and "pyrolysis allotment" or "pr-value" mean a real pyrolysis recycle content that is either transferred from an originating composition, e.g., compound, polymer, feedstock, product, or stream obtained from the pyrolysis of recycled waste. In the latter case, the recycle content value, or at least a portion of which, may originate from the pyrolysis of recycled waste.

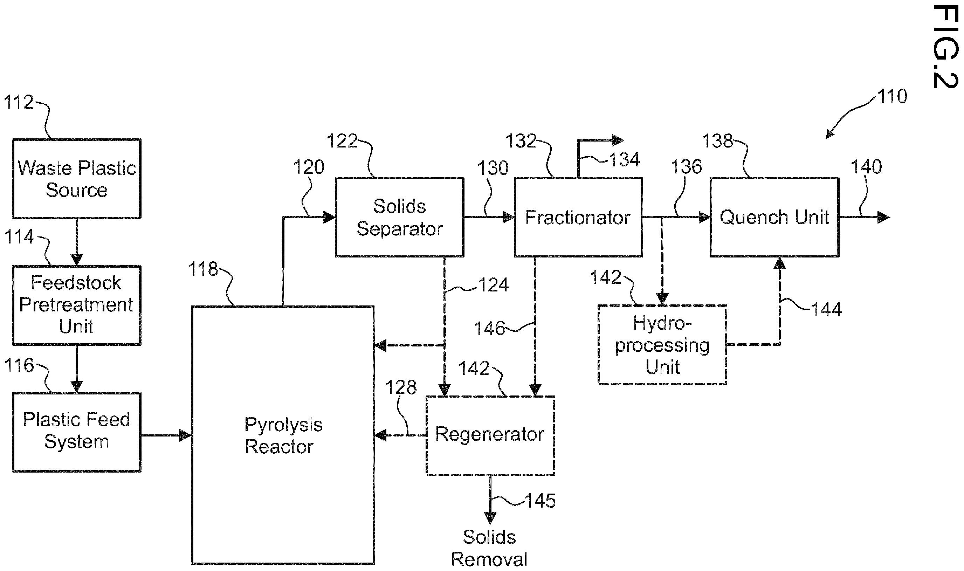

Referring again to US 2022/0402860 A1, Fig. 2 illustrates a simplified variant of the pyrolysis-based system and process illustrated in FIG. 1, in which "purification" is used instead of "hydroprocessing" wherein one or more recycled waste is at least partially converted, particularly recycled plastic waste into various useful r-products.

The exemplary pyrolysis system 110 depicted in FIG. 2 may be employed to at least partially convert one or more recycled waste, particularly recycled plastic waste, into various useful pyrolysis-derived products. The pyrolysis system 110 may include a waste plastic source 112 for supplying one or more waste plastics to the system 110. The plastic source 112 can be, for example, a hopper, storage bin, railcar, over-the-road trailer, or any other device that may hold or store waste plastics. The waste plastics supplied by the plastic source 112 may be in the form of solid particles, such as chips, flakes, or a powder. The waste plastics may include one or more post-consumer waste plastic such as, for example, high density polyethylene, low density polyethylene, polypropylene, other polyolefins, polystyrene, polyvinyl chloride (PVC), polyvinylidene chloride (PVDC), polyethylene terephthalate, polyamides, poly(methyl methacrylate), polytetrafluoroethylene, or combinations thereof. The waste plastics may also include high density polyethylene, low density polyethylene, polypropylene, or combinations thereof. the plastic waste may also comprise not more than a weight percentage of 1 to 25 weight percent of polyvinyl chloride and/or polyethylene terephthalate.

The waste plastic-containing feed may comprise at least a percentage between 30 and 99 weight percent of one or more different kinds of waste plastic. The waste plastic-containing feed may also comprise one or more kinds of plasticized plastics.

As depicted in FIG. 2, the solid waste plastic feed from the plastic source 112 can be supplied to a feedstock pretreatment unit 114. While in the feedstock pretreatment unit 114, the introduced waste plastics may undergo a number of pretreatments to facilitate the subsequent pyrolysis reaction. Such pretreatments may include, for example, washing, mechanical agitation, flotation, size reduction or any combination thereof. The introduced plastic waste may be subjected to mechanical agitation or subjected to size reduction operations to reduce the particle size of the plastic waste. Such mechanical agitation can be supplied by any mixing, shearing, or grinding device known in the prior art which may reduce the average particle size of the introduced plastics by a value between 10 and 75 percent.

Next, the pretreated plastic feed may be introduced into a plastic feed system 116. The plastic feed system 116 may be configured to introduce the plastic feed into the pyrolysis reactor 118. The plastic feed system 116 may comprise any system known in the prior art that is capable of feeding the solid plastic feed into the pyrolysis reactor 118. The plastic feed system 116 may comprise a screw feeder, a hopper, a pneumatic conveyance system, a mechanic metal train or chain, or combinations thereof.

While in the pyrolysis reactor 118, at least a portion of the plastic feed may be subjected to a pyrolysis reaction that produces a pyrolysis effluent comprising a pyrolysis oil, e.g., r-PyOil, and a pyrolysis gas, e.g., r-Pyrolysis Gas. The pyrolysis reactor 118 may be an extruder, a tubular reactor, a tank, a stirred tank reactor, a riser reactor, a fixed bed reactor, a fluidized bed reactor, a rotary kiln, a vacuum reactor, a microwave reactor, an ultrasonic or supersonic reactor, or an autoclave, or a combination of these reactors.

More generally, pyrolysis is a process that involves the chemical and thermal decomposition of the introduced feed. Although all pyrolysis processes may be generally characterized by a reaction environment that is substantially free of oxygen, pyrolysis processes may be further defined, for example, by the pyrolysis reaction temperature within the reactor, the residence time in the pyrolysis reactor, the reactor type, the pressure within the pyrolysis reactor, and the presence or absence of pyrolysis catalysts. The pyrolysis reaction may involve heating and converting the plastic feed in an atmosphere that is substantially free of oxygen or in an atmosphere that contains less oxygen relative to ambient air. The atmosphere within the pyrolysis reactor 118 may comprise not more than 0.5 to 5 weight percent of oxygen gas. The pyrolysis process may be carried out in the presence of an inert gas, such as nitrogen, carbon dioxide, and/or steam. The pyrolysis process may also be carried out in the presence of a reducing gas, such as hydrogen and/or carbon monoxide.

Thereupon, the temperature in the pyrolysis reactor 118 may be adjusted to as to facilitate the production of certain end products. The pyrolysis temperature in the pyrolysis reactor 118 may be between 325°C or 1100°C, including certain smaller ranges like 350 to 900°C, 350 to 700°C, 350 to 550°C, 350 to 475°C. 500 to 1100°C, 600 to 1100°C, or 650 to 1000°C. However, the pyrolysis temperature in the pyrolysis reactor 118 should be not more than 1100°C. It is noted hereby that, if the target product is oil, the corresponding temperature window is from 300 to 600°C. Above that temperature range, at 600 to 800°C, olefins tend to be the target product. At > 800°C, predominantly gaseous products are obtained.

Referring again to FIG. 2, the pyrolysis effluent 120 exiting the pyrolysis reactor 118 generally comprises pyrolysis gas, pyrolysis vapors, and residual solids. The conversion effluent 120 from the pyrolysis reactor 118 may be introduced into a solids separator 122. The solids separator 122 may be any conventional device capable of separating solids from gas and vapors such as a cyclone separator or a gas filter or combination thereof. The solids separator 122 removes a substantial portion of the solids from the conversion effluent 120. At least a portion of the solid particles 24 recovered in the solids separator 122 may be introduced into an optional regenerator 126 for regeneration, generally by combustion. After regeneration, at least a portion of the hot regenerated solids 128 may be introduced directly into the pyrolysis reactor 118. At least a portion of the solid particles 124 recovered in the solids separator 122 may be directly introduced back into the pyrolysis reactor 118, especially if the solid particles 124 contain a notable amount of unconverted plastic waste. Solids may be removed from the regenerator 126 through line 145 and discharged out of the system.

Turning back to FIG. 2, the remaining gas and vapor conversion products 130 from the solids separator 122 may be introduced into a fractionator 132. In the fractionator 132, at least a portion of the pyrolysis oil vapors may be separated from the pyrolysis gas to thereby form a pyrolysis gas product stream 134 and a pyrolysis oil vapor stream 136. Suitable systems to be used as the fractionator 132 may include, for example, a distillation column, a membrane separation unit, a quench tower, a condenser, or any other known separation unit known in the art. Any residual solids 146 accrued in the fractionator 132 may also be introduced in the optional regenerator 126 for additional processing.

At least a portion of the pyrolysis oil vapor stream 136 may be introduced into a quench unit 138 in order to at least partially quench the pyrolysis vapors into their liquid form (i.e., the pyrolysis oil). The quench unit 138 may comprise any suitable quench system known in the art, such as a quench tower. The resulting liquid pyrolysis oil stream 140 may be removed from the system 110 and utilized in the other downstream applications described herein. The liquid pyrolysis oil stream 140 may not be subjected to any additional treatments, such as hydrotreatment and/or hydrogenation, prior to being utilized in any of the downstream applications described herein.

At least a portion of the pyrolysis oil vapor stream 136 may also be introduced into a hydroprocessing unit 142 for further refinement. The hydroprocessing unit 142 may comprise a hy-drocracker, a catalytic cracker operating with a hydrogen feed stream, a hydrotreatment unit, and/or a hydrogenation unit. While in the hydroprocessing unit 142, the pyrolysis oil vapor stream 136 may be treated with hydrogen and/or other reducing gases to further saturate the hydrocarbons in the pyrolysis oil and remove undesirable byproducts from the pyrolysis oil. The resulting hydroprocessed pyrolysis oil vapor stream 144 may be removed and introduced into the quench unit 138.

Alternatively, the pyrolysis oil vapor may be cooled, liquified, and then treated with hydrogen and/or other reducing gases to further saturate the hydrocarbons in the pyrolysis oil. In this case, the hydrogenation or hydrotreating is performed in a liquid phase pyrolysis oil. No quench step is required in this embodiment post-hydrogenation or post-hydrotreating.

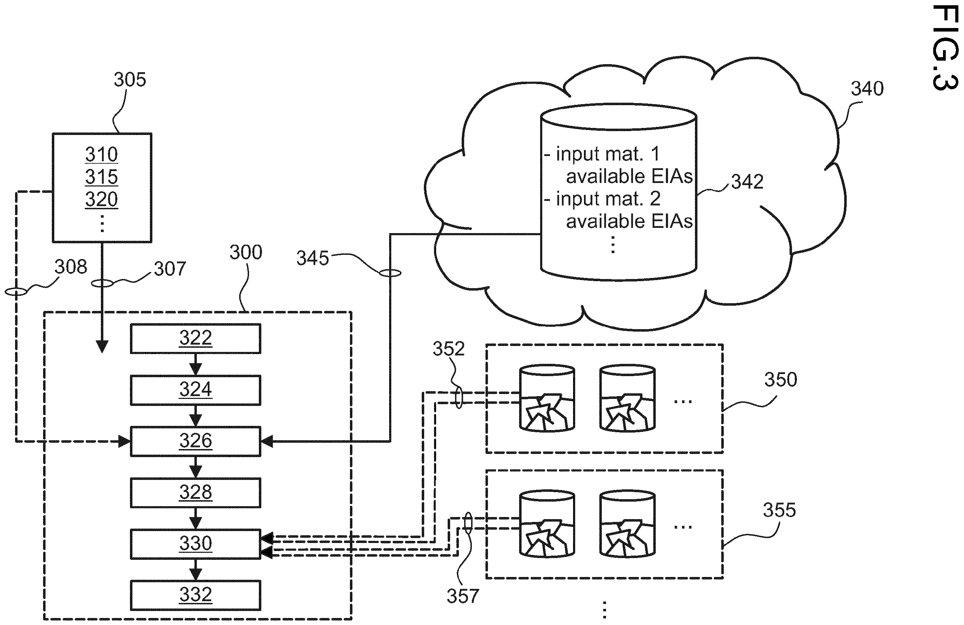

FIG. 3 depicts an embodiment of the herein disclosed method and system for controlling the production of a chemical product with a requested certain environmental impact.

The method starts with an underlying order, for instance a shown electronic or paper document 305 or an according electronic order file, for requesting a certain chemical product 310 with a certain quantity 315. In addition, the order includes a requested environmental impact 320 of the ordered chemical product 310, for instance a certain percentage of waste-derived input material(s), e.g. recycled, reused or renewed input material(s), which will be or have been used for production of the ordered product 310.

Alternatively, or additionally, the requested environmental impact 320 of the ordered chemical product 310 can be a certain percentage of non-waste derived input material(s), e.g. biomass-based or bio-based input material(s), which will be or have been used for production of the ordered product 310. Alternatively, or additionally, the requested environmental impact 320 of the ordered chemical product 310 can be a certain percentage of "green" input materials or energy sources being used for the production process or a certain percentage of the underlying carbon footprint of the chemical product which may also include the carbon footprint of underlying production process steps. It is noted hereby that the term "waste" being used herein, in particular for "chemcycling" mainly relates to "post-consumer" waste as input for the chemical production processes. However, in addition to that, "post-industrial" waste is also conceivable as such input material.

The document/file 305 is provided to a computer-implemented order processing unit 300 which in a first process step 322 determines which input material(s) is/are needed for production of the ordered chemical product. This process step 322 can be performed either locally by the order processing unit 300 of the underlying product producer or utilizing an underlying chemical library or corresponding expert system being provided in a cloud 340.

In a next process step 324, it is determined which local or external material providers or storage locations, e.g. whether the shown exemplary locations 350 and 355, can provide the input material(s) being determined in process step 322.

In the present embodiment, in the cloud 340 further provided is a database 342 which contains a library of chemical input materials (see exemplary "input material 1" and "input material 2") and available environmental impact attributes ("ElAs" in FIG. 3) for the above-described environmental impacts of these materials. In the following process step 326, for the determined 322 input material(s), copies of all available environmental impact attributes are gathered or downloaded 345 to the order processing unit 300. Based on the gathered collection of (the copies of) environmental impact attributes, in the next process step 328 it is determined which input material(s) can be ordered from which material storage location (e.g. the shown locations 350 and 355) to fulfill or to meet the requested 305 environmental impact 320 of the ordered final product.

In the area of chemical recycling, the ElAs can be divided into or assigned to the following three exemplary material or substance categories A) - C), which correspond with the herein disclosed waste material-related environmental impact attributes:
A) Preferred materials for chemical recycling, i.e. materials with a positive environmental impact:
   Solid hydrocarbon rich materials, such as polymers, e.g. Polyethylene (HPDE, LDPE), Polypropylene (PP) and Polystyrene (EPS), Polyisoprene, Polyisobutylene, Polybutadiene.
B) Less-Preferred materials for chemical recycling, i.e. materials with a moderate environmental impact:
   Polyvinvylchlorid (PVC), Polyester (PES), Polyamide (PA), e.g. Nylon, Nylon6 and Nylon 6,6, Polyurethan (PU), Epoxy Resins, Polyethylene Terephthalate (PET), Polymethacrylate (PMMA), Polylactic Acid (PLA), Polyacrylonitrile (PAN), and materials containing hydrocarbons derived from wood, agricultural products and algae.
C) Non-preferred materials for chemical recycling, i.e. materials with no or even a negative environmental impact:
   Teflon (PTFE), Silicone, Glass, Pigments, Metal(s) and metal(s) content containing materials as for example (Pb, Hg, As, Zn, Si, Na, K, Mg, Ni, Cu, ....), and the like.

In process step 330, the input material(s) being determined in process step 328 are gathered physically, namely transferred or transported 352, 357, from each of the two locations 350, 355 to the underlying producer using the order processing unit 300. In the present embodiment, in a last process step 332, for the environmental impact attributes actually used for the production of the ordered chemical product, the original instances being stored in the database 342 are removed from or deleted in the above described (external) library.

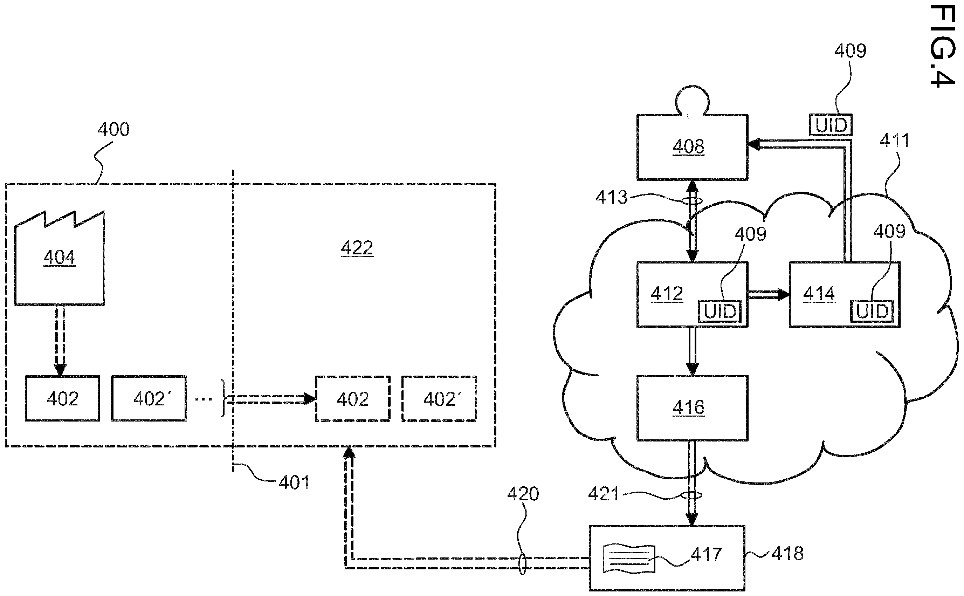

One reason for performing the last process step 332 is that the ElAs can be handled by means of a waste material-related data object which includes the environmental impact attributes for each of the multitude of chemical input materials required for production of a chemical product. The underlying producer therefore needs to buy in such ElAs and if the producer uses such ElAs for the production of a chemical product the underlying ElAs are consumed and thus not any longer available. Insofar such used ElAs need to be deleted in the database 342. Referring now to FIG. 4, it is illustrated how a herein described waste material-related data object can be implemented in connection with an underlying waste-derived material/product within a mentioned distributed and cross-border arranged or located chemical production network 400.

It is hereby assumed that the chemical production network 400 produces a chemical product in a production facility 404 wherein, during the production process, several waste materials 402, 402' etc. are generated. It is further assumed that the generated waste materials 402, 402' are transported or shipped 403 within the chemical production network 400 and meanwhile enter a relevant boundary 401 of the chemical production network 400 between two regions with different technical requirements regarding the possible processing of waste-derived material.

Upon production of the chemical product in the production facility 404, for the generated waste or waste-derived materials 402, 402', a waste material-related data object 417 is generated. For that purpose, an apparatus 410 is configured to generate the waste material-related data object 417.

A requestor 408 requests to get or acquire one or more of the waste materials 402, 402', who needs to get access to the contents of the waste material-related data object 417 for the above-mentioned purpose, is required to first obtain an according unique identifier 409 being stored in the present example de-centrally in a cloud computing environment ("cloud") 411. For this process step or task, the requestor 408 is also configured to generate an according request 413 for the unique identifier 409. Such a request 413 may be automatically generated or triggered by a labelling system, such as a QR Code generator. The request 413 to provide the unique identifier 409 is provided to a identifier generator 412 that is configured to generate the unique identifier 409 de-centrally. The identifier generator 412, in the present example, then provides the generated unique identifier 409 to a identifier provider 414.

The identifier provider 414 then provides 415 the unique identifier 409 to the requestor 408, in order to associate the unique identifier 409 with the requested waste materials 402, 402'. This association may include the encoding of the unique identifier into a QR code and providing the QR code for labelling the waste materials 402, 402'. This way, a physical identifier 417 is provided too that relates to the underlying (real) physical entities 402, 402' of the waste materials, based on the unique identifier 409.

The identifier generator 412 also provides the unique identifier 409 to a data generator 416 that is configured to generate a waste material-related data object 417 for the waste materials 402, 402'. The generated waste material-related data object 417 includes a beforehand described unique identifier 409 and underlying data concerning e.g. the origin and history and chemical properties of the waste-derived materials 402, 402'. Those data further include a digital representation pointing to the underlying waste materials data or parts thereof. The waste material-related data object 417 further includes, or is related to, an authentication mechanism that is associated with the uniqueidentifier 409 and the mentioned chemical data of the waste-derived materials 402, 402'.

In the present example, the waste material-related data object 417 is provided 421 to a corresponding data provider 418. The data provider 418 is configured to provide 420 the waste material-related data object 417 and the chemical waste-related data associated with the waste material-related data object 417 to the chemical production network 400, in the present example from the left side with the production facility 404 (i.e. source region) to the right side (i.e. target region) 422 between the technical regulatory relevant boundary 401 of the chemical production network where the waste materials 402, 402' have been transported or shipped.

Referring again to FIG. 1, regarding the herein described waste-derived input materials, during the pyrolysis processing step 10 of the underlying production process, the further values "pyrolysis recycle content value" and "pr-value" (being provided to the cracker 20) relate to the real quantity of material having its origin in the pyrolysis of recycled waste, as being the input material(s) for the pyrolysis 10 with the described "r-value". The pr-value insofar is a subset of the r-value that is tied to the pyrolysis of recycled waste. The r-value or pr-value can be calculated by mass or percentage wherein a recycle content value may be deducted from a real recycle content inventory and may be applied to a product or composition to attribute recycle content to the product or composition.

## Claims

1. Computer-implemented method for controlling the production of a chemical product with a certain environmental impact, the method comprising the following steps in an arbitrary order:
- Receiving a request, or order, indicating a chemical product, a desired quantity of the chemical product and a desired environmental impact of the chemical product;
- determining a local and/or foreign location of one or more underlying chemical input materials required for the production of the requested chemical product, in order to fulfil the desired quantity and the desired environmental impact of the request;
- gathering from a database, based on the determined local and/or foreign location of the required chemical input material(s), environmental impact attributes corresponding to the desired environmental impact required for production of the requested chemical product;
- receiving the chemical input material(s) required for production of the requested chemical product from the determined local and/or foreign location(s), wherein the received chemical input material(s) are associated with the gathered environmental impact attributes.

2. Method according to claim 1, wherein the environmental impact attributes for the chemical input material(s) received from the local and/or foreign location(s) are removed in the database.

3. Method according to claim 1 or 2, wherein the received chemical input material(s) are associated with the gathered environmental impact attributes using physical markings.

4. Method according to any of claims 1 to 3, wherein the step of determining a location of the chemical product with the desired quantity to meet the request includes determination of potentially relevant waste-derived input material(s) and/or not waste-derived input material(s) required to achieve the desired environmental impact.

5. Method according to claim 4, wherein waste-derived input material(s) are classified into at least one of the following waste material-related environmental impact attributes: "recyclable"/"recycled", "reusable"/"reused", "renewable"/"renewed", "recoverable"/"recovered, "disposable"/"disposed"; and wherein not waste-derived input material(s) are classified into at least one of the following non-waste material-related environmental impact attributes: "biomass-based", "virgin feedstock", "bio-based" or "fossil feedstock".

6. Method according to claim 4 or 5, wherein the environmental impact attributes include hydrocarbon content of the waste-derived input material(s).

7. Method according to any of claims 4 to 6, wherein the step of determining a location of the chemical product with the desired quantity to meet the request further includes determination of potentially required energy sources to achieve the desired environmental impact, wherein the energy sources are classified into the following energy-related environmental impact attributes "non-renewable energy-based" and "renewable energy-based".

8. Method according to any of the preceding claims, wherein the database provides available environmental impact attributes for a multitude of chemical input materials required for production of a chemical product, and wherein the environmental impact attributes of the multitude of chemical input materials are allocated to waste-derived input material(s) and/or to not waste-derived input material(s) according to claim 3 and/or to energy sources according to claim 4.

9. Method according to claim 8, wherein providing a waste material-related data object including already used environmental impact attributes for each of the multitude of chemical input materials required for production of a chemical product.

10. Method according to claim 9, wherein authorization to access the waste material-related data object is controlled by at least one authorization rule being associated with a unique identifier.

11. Method according to claim 10 wherein the at least one authorization rule is configured for reverse data tracking of the waste-derived material used for production of a product.

12. Computer-Implemented method for producing a chemical product with a certain environmental impact, according to the steps of any of the preceding claims.

13. Computer-implemented system for controlling the production of a chemical product with a certain environmental impact, the system comprising a request or order processing unit for receiving requests indicating a chemical product together with a desired quantity of the chemical product and a desired environmental impact of the chemical product, the request/order processing unit being set up for:
- determining a local location and/or a foreign location of underlying chemical input material(s) required for the production of the requested chemical product, in order to fulfil the desired quantity and the desired environmental impact;
- gathering from a database, based on the determined local and/or foreign location of the required chemical input material(s), environmental impact attributes corresponding to the desired environmental impact required for production of the requested chemical product;
- receiving the chemical input material(s) required for production of the requested chemical product from the determined local and/or foreign location(s);

14. System according to claim 13, wherein the environmental impact attributes for the chemical input material(s) received from the local and/or the foreign location(s) are removed in the database.

15. System according to claim 13 or 14, wherein the database comprises location information about local and/or foreign real stocks of the multitude of chemical input materials required for production of a chemical product and virtual stocks of available environmental impact attributes for the multitude of chemical input materials required for production of a chemical product.

16. System according to any of claims 13 to 15, wherein the database is arranged in a decentralized network of nodes which share data with each other, for storing available environmental impact attributes for a multitude of chemical input materials required for production of a chemical product.

17. System according to claim 11 or 12 wherein the available environmental impact attributes are allocated to waste-derived input material(s) and/or to not waste-derived input material(s) according to claim 5 and/or claim 6 and/or to energy sources according to claim 7.

18. System according to any of claims 13 to 17, comprising a control unit for production of the chemical product with the desired quantity of the requested chemical product and the desired environmental impact of the requested chemical product, based on the method according to any of claims 1 to 12.

19. System according to any of claims 13 to 18, providing a waste material-related data object to allocate the removed environmental impact attributes to the requested chemical product.

20. Software-implemented product element when running on a computer for proving a chemical product together with its allocated environmental impact attributes.
